# EUROPEAN PATENT APPLICATION

(11) **EP 1 650 318 A2**
(43) Date of publication of application: **26.04.2006**
(21) Application number: 05022513.5
(22) Date of filing: 14.10.2005
(51) Int. Cl.: C22C 9/00

(54) **Welding electrode material and an electrode made of the material**

(30) Priority: 22.10.2004 US 971312
(71) Applicant: Outokumpu Copper Products Oy, 02200 Espoo (FI)
(72) Inventor: Nippert, Russell, Columbus OH 43221 (US); Swank, Brian, Marengo OH 43334 (US); Ghita, Mihnea, II. 60012 Delaware (US); Koppinen, Ilpo, Delaware OH 43015 (US)
(74) Representative: Zipse + Habersack

(57) **Abstract**

The invention relates to a welding electrode material for resistance spot welding which material contain at least one copper based precipitation hardenable alloy, wherein the copper based precipitation hardenable alloy is alloyed by phosphorus. The invention also relates to a welding electrode itself.

## Description

This invention relates to at least one copper based precipitation hardenable alloy to be used as a material for welding electrodes so that high strength mechanical properties and an anneal resistance of the welding electrode are improved. The invention also relates to an electrode made of the material for resistance spot welding in applications involving preferably steel and aluminium.

The electrical conductivity and strength of copper is dependent upon the purity of copper. Moreover high purity copper is too soft for many applications where high strength mechanical properties and an anneal resistance are required. Direct alloying of copper has considerable disadvantages since the direct alloying has an inverse relationship on the conductivity of copper. A beneficial way of producing a high strength copper alloy with good electrical properties is to select an alloying element that forms a precipitate within the copper. The advantage with precipitation hardenable copper alloys is the amount of alloying required which is low and once aged the electrical conductivities greater than 85 % IASC can be achieved.

A relatively small range of precipitation hardenable copper based alloys can be used for resistance spot welding electrodes in applications involving steel and aluminium. For the resistance spot welding of plain carbon sheet steel copper-chromium (CuCr), copper-chromium-zirconium (CuCrZr) or copper-zirconium (CuZr) alloys are normally chosen. Further, for the resistance spot welding of galvanized steel CuCr, CuCrZr and CuZr precipitation hardenable copper alloys are typically used. In applications concerning the resistance spot welding of aluminium a copper-zirconium precipitation hardenable alloy is on average chosen. In general the key elements of the resistance spot welding electrode during welding are the conductivity, hot hardness, resistance to sticking, surface wear rate and current density prior to expulsion.

The object of the present invention is to eliminate some drawbacks of the prior art and to achieve at least one improved precipitation hardenable copper alloy, which is used as a material for resistance spot welding electrodes and which include improvements in the properties of the alloys having at least a decreased resistance to sticking, a larger weld current operating range and increased conductivity when comparing with the prior art. The object of the invention is also to achieve a welding electrode itself. The essential features of the present invention are enlisted in the appended claims.

In accordance with the invention copper-chromium (CuCr), copper-chromium-zirconium (CuCrZr) or copper-zirconium (CuZr) precipitation hardenable alloys containing phosphorus as an alloying element in the range of 200 to 500 parts per million (ppm) is used as a material for resistance spot welding electrodes. The addition of phosphorus to the chromium and zirconium bearing copper has a significant effect on the hardness and on electrical properties, which are beneficial to resistance spot welding electrodes.

The copper-chromium (CuCr), copper-chromium-zirconium (CuCrZr) or copper-zirconium (CuZr) precipitation hardenable alloys in accordance with the invention contain 200 to 500 ppm phosphorus, 0,1 - 1,5 % by weight chromium and/or 0,01 - 0,25 % by weight zirconium, the remainder being copper and the usual impurities so that the copper content is at least 98,5 % by weight.

With respect to hardness within chromium bearing copper precipitation hardenable alloys containing phosphorus as an alloying element in accordance with the invention, as the formation of undissolved and precipitated copper phosphide (Cu₃P) phase consumes a part of copper in the alloy, the amount of the remaining chromium becomes smaller than the solubility of chromium in copper of a solution temperature of 1000 °C. The formation of the copper phosphide phase implies that a higher content of chromium can be added to the copper-chromium-phosphorus (CuCrP) alloys to result in an enhanced precipitation hardenable alloy.

In a case, when zirconium is an alloying element with phosphorus, due to the atomic size factor of zirconium, zirconium has the lowest solubility within copper when phosphorus has the highest solubility. Phosphorus when alloyed into copper has the largest increase on the resistivity of copper, whereas the chromium addition will have the smallest increase. Further, zirconium significantly affects the electrical conductivity of copper. However, zirconium does not result in a substantial increase in resistivity because the low solubility of zirconium restricts greatly the amount of zirconium dissolved in copper.

The addition of phosphorus into chromium and/or zirconium bearing precipitation hardenable copper alloys in accordance with the invention has a positive impact on resistivity. The alloyed phosphorus forms precipitates, such as chromium phosphide (Cr₃P) and zirconium phosphide (Zr₅P₄), which reduces the amount of chromium and/or zirconium that can be dissolved into the matrix. This effect, the formation of phosphides, is beneficial to resistance spot welding electrodes because the formation of phosphides extends the operating current window before expulsion during welding.

With regard to recrystallization in the alloys used in the resistance spot welding electrodes, during the welding spot welding itself recrystallization is retarded because of high temperature and thus the lifetime of the resistance spot welding electrode is to be extended. The retardation of crystallization minimizes the rate of mushrooming, which the electrode face undergoes during welding. Mushrooming is an effect of the electrode material annealing at the weld surface and then deforming under the applied force from the weld system. The advantage of the alloys of the invention is that the formation of phosphides in chromium and zirconium copper alloys, which increases the recrystallization temperature is increased in the cold worked condition. The increased recrystallization temperature allows the phosphide containing alloys to withstand mushrooming for a longer period of time.

An important feature of resistance spot welding electrodes is the ability to avoid sticking to the weld surface after completing a weld. The antisticking test is used to determine how well a resistance spot welding electrode can handle high current density. The test ran until heavy sticking occurs, at that point the current density can be determined by dividing the electrode contact area by the welding current. The current density value can then be compared to other electrode caps. For evaluation of the effects of phosphides two resistance spot electrodes, one composed of copper zirconium (CuZr) representing the prior art and the other copper zirconium added by phosphorus (CuZrP) in accordance with the invention were tested with respect to antisticking. The averaged data from four different trials is shown in the following table:

| Weld number | Current Actual (Amps) | | Current Density (Amps/in²) | |
|---|---|---|---|---|
| | CuZr | CuZrP | CuZr | CuZrP |
| 1-15 | 8.7 | 8.7 | 155 | 155 |
| 16 - 30 | 9.6 | 9.8 | 171 | 175 |
| 31 - 45 | 10.9 | 10.8 | 195 | 193 |
| 46 - 60 | 11.7 | 11.7 | 209 | 209 |
| 61-75 | 12.7 | 12.7 | 227 | 227 |
| 76-90 | 13.7 | 13.6 | 245 | 243 |
| 91-105 | 14.7 | 14.6 | 263 | 261 |
| 106-120 | 15.6* | 15.7 | 279 | 280 |
| 121-135 | 16.8* | 18.7 | 300 | 334 |
| 136-150 | 17.7* | 17.7 | 316 | 316 |
| 151-165 | 18.7* | 18.7 | 334 | 334 |
| 166-180 | | 19.6 | | 350 |
| 181-195 | | 20.5* | | 366 |

| | | | | |
|---|---|---|---|---|
| * Heavy expulsion and heavy sticking | | | | |

The results in the table show that a higher current density can be achieved with the resistance spot welding electrodes made of a copper zirconium alloy having an alloying component of phosphorus (CuZrP) in accordance with the invention. From the trials conducted the copper zirconium electrode (CuZr) of the prior art developed heavy expulsion and sticking at a current density of 279 Amps/in². The electrodes made of the copper zirconium alloy added by phosphorus (CuZrP) were able to reach a current density of 366 Amp/in² before heavy expulsion and sticking were encountered. The ability of the electrodes made of the copper zirconium alloy added by phosphorus (CuZrP) to withstand a higher current density without expulsion allows them to operate over a larger weld window and potential and that allow the weld schedule to be extended prior to redressing the electrode face.

## Claims

1. Welding electrode material for resistance spot welding which material contain at least one copper based precipitation hardenable alloy, wherein the copper based precipitation hardenable alloy is alloyed by phosphorus.

2. Welding electrode material according to the claim 1, wherein the alloy contains 200 to 500 ppm phosphorus.

3. Welding electrode material according to the claim 1 or 2, wherein the copper based precipitation hardenable alloy is a copper chromium alloy.

4. Welding electrode material according to the claim 3, wherein the alloy contains 0,1 to 1,5 % by weight chromium.

5. Welding electrode material according to the claim 1 or 2, wherein the copper based precipitation hardenable alloy is a copper zirconium alloy

6. Welding electrode material according to the claim 5, wherein the alloy contains 0,01 to 0,25 % by weight zirconium.

7. Welding electrode material according to the claim 1 or 2, wherein the copper based precipitation hardenable alloy is a copper chromium zirconium alloy.

8. Welding electrode material according to the claim 7, wherein the alloy contains 0,1 to 1,5 % by weight chromium and 0,05 to 0,25 % by weight zirconium.

9. Welding electrode to be used in resistance spot welding, wherein the electrode contains at least one copper based precipitation hardenable alloy, which is alloyed by phosphorus.

10. Welding electrode according to the claim 9, wherein the amount of phosphorus in the copper based precipitation hardenable alloy is between 200 and 500 ppm.

11. Welding electrode according to the claim 9 or 10, wherein a copper chromium alloy is alloyed by phosphorus.

12. Welding electrode according to the claim 11, wherein the alloy contains 0,1 to 1,5 % by weight chromium.

13. Welding electrode according to the claim 9 or 10, wherein a copper zirconium alloy is alloyed by phosphorus.

14. Welding electrode according to the claim 13, wherein the alloy contains 0,01 to 0,25 % by weight zirconium.

15. Welding electrode according to the claim 9 or 10, wherein a copper chromium zirconium alloy is alloyed by phosphorus.

16. Welding electrode according to the claim 15, wherein the alloy contains 0,1 to 1,5 % by weight chromium and 0,01 to 0,25 % by weight zirconium.
